(19)

Europäisches Patentamt

European Patent Office

Office européen des brevets

(11) **EP 4 485 019 A1**

(12) **EUROPEAN PATENT APPLICATION**
published in accordance with Art. 153(4) EPC

(43) Date of publication:
**01.01.2025 Bulletin 2025/01**

(21) Application number: **23756322.6**

(22) Date of filing: **13.02.2023**

(51) International Patent Classification (IPC):
*G02B 6/02* $^{(2006.01)}$      *G02B 6/255* $^{(2006.01)}$
*G02B 6/38* $^{(2006.01)}$

(52) Cooperative Patent Classification (CPC):
**G02B 6/02; G02B 6/255; G02B 6/38**

(86) International application number:
**PCT/JP2023/004755**

(87) International publication number:
**WO 2023/157797 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.02.2022  JP 2022025021**

(71) Applicant: **Fujikura Ltd.**
**Tokyo 135-8512 (JP)**

(72) Inventor: **ODA, Takuya**
**Sakura-shi, Chiba 285-8550 (JP)**

(74) Representative: **Plasseraud IP**
**104 Rue de Richelieu**
**CS92104**
**75080 Paris Cedex 02 (FR)**

(54) **OPTICAL FIBER, OPTICAL DEVICE, AND METHOD FOR MANUFACTURING OPTICAL DEVICE**

(57)     Achieved is an optical fiber which has a helical core and in which change in a position of the core in an end surface which may occur due to end-surface polishing is suppressed. An optical fiber (1) includes a helical section (I0) in which non-central cores (12) each have a helical shape and a first non-helical section (I1) in which the non-central cores (12) each have a linear shape and which includes a first end part of the optical fiber (1).

FIG. 1

## Description

Technical Field

The present invention relates to an optical fiber having a helical core. In addition, the present invention relates to an optical device including such an optical fiber.

Background Art

In recent years, optical fibers which are reduced in polarization mode dispersion and the like by forming cores thereof into helical shapes have been developed. In particular, a multicore fiber in which at least one core thereof has a helical shape is also called "spun multicore fiber" and is used, for example, for contact sensors, shape sensors, medical applications, and communication applications. Patent Literature 1 below discloses a conventional spun multicore fiber.

Citation List

[Patent Literature]

[Patent Literature 1]
Specification of US Patent No. 8773650

Summary of Invention

Technical Problem

Optical fibers having helical cores, in a case where subjected to end-surface polishing and/or excess-length adjustment in a state where the optical fibers are incapable of being rotated or are difficult to rotate, change in positions of the cores in end surfaces (positions in a circumferential direction). Amounts of the changes in the positions of the cores in the end surfaces are determined in accordance with amounts of changes in fiber length due to the end-surface polishing and/or excess-length adjustment and the number of the helices of each cores per unit length. For example, in a case where a first optical fiber having a helical core and a second optical fiber are connected with each other through their respective connectors that are attached to end parts of the optical fibers so as to be incapable of being rotated or be difficult to rotate, in particular, in a case where end-surface polishing and/ excess-length adjustment are carried out after the optical fibers have been attached to the connectors, a problem may arise in that an optical loss at the connection point becomes great. This is because due to the fact that in conventional optical fibers, the number of the helices per unit length is uniform throughout the entire length, change in a position of a core relative to the connector in an end surface of the first optical fiber due to the end-surface polishing and/ excess-length adjustment causes misalignment between the positions of the cores of the two optical fibers in the end surfaces thereof.

An aspect of the present invention has been made in light of the foregoing problem, and it is an object thereof to achieve an optical fiber which has a helical core and in which change in a position of the core in an end surface which may occur in a case where end-surface polishing and/ excess-length adjustment are carried out is suppressed.

Solution to Problem

An optical fiber in accordance with an aspect of the present invention is an optical fiber including at least one core, the optical fiber including a helical section in which the at least one core has a helical shape; and a first non-helical section in which the at least one core has a linear shape and which includes a first end part of the optical fiber or a first gently helical section in which the number of helices of the at least one core per unit length is smaller than that in the helical section and which includes the first end part of the optical fiber.

A method for manufacturing an optical device, in accordance with an aspect of the present invention includes a cutting step of cutting an optical fiber including at least one core and including a helical section in which the at least one core has a helical shape and a gently helical section in which the number of helices of the at least one core per unit length is smaller than that in the helical section, the cutting being carried out in the gently helical section.

Advantageous Effects of Invention

According to an aspect of the present invention, it is possible to achieve an optical fiber which has a helical core and in which a change in a position of the core in an end surface which may occur in a case where end-surface polishing and/or excess-length adjustment are carried out is suppressed.

Brief Description of Drawings

Fig. 1 is a perspective view illustrating a configuration of an optical fiber in accordance with Embodiment 1 of the present invention.

Fig. 2 is a perspective view illustrating an example of a method for manufacturing the optical fiber illustrated in Fig. 1.

Fig. 3 is a perspective view illustrating a configuration of an optical fiber in accordance with Embodiment 2 of the present invention.

Fig. 4 is a perspective view illustrating an example of a method for manufacturing the optical fiber illustrated in Fig. 3.

Fig. 5 is a perspective view illustrating a configuration of a connector-attached optical fiber including the optical fiber illustrated in Fig. 1.

Fig. 6 is a perspective view illustrating a configuration of an optical device including the optical fiber illustrated in Fig. 1.

Fig. 7 is a cross-sectional view illustrating a variation of the optical fiber illustrated in Fig. 1 or Fig. 3.

Description of Embodiments

[Embodiment 1]

(Configuration of optical fiber)

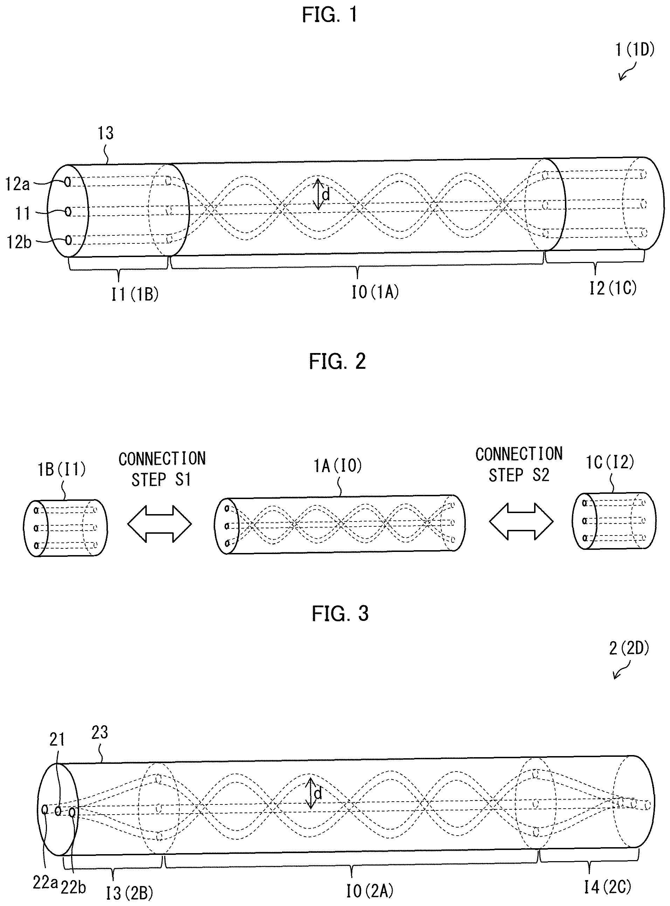

With reference to Fig. 1, the following description will discuss an optical fiber 1 in accordance with Embodiment 1 of the present invention. Fig. 1 is a perspective view illustrating a configuration of the optical fiber 1.

The optical fiber 1 includes a central core 11, non-central cores 12 (one example of "at least one core" in the claims), and a clad 13. Further, the optical fiber 1 includes a helical section I0, a first non-helical section I1, and a second non-helical section I2.

The central core 11 is a columnar (in the illustrated example, cylindrical) structure which is provided along a center axis of the optical fiber 1 and which has a refractive index higher than that of the clad. The central core 11 is made of, for example, quartz glass containing updopant, such as germanium (Ge). Note that in a case where the clad 13 contains downdopant, the central core 11 may be made of pure quartz glass. In the helical section I0, the first non-helical section I1, and the second non-helical section I2, the central core 11 has a linear shape including the center axis of the optical fiber 1. By the central core 11, a linear light path including the center axis of the optical fiber 1 is formed inside the optical fiber 1.

The diameter of the central core 11 is, for example, not less than 5 pm and not more than 15 pm. Note, however, that the diameter of the central core 11 can be determined as appropriate and is not limited to not less than 5 pm and not more than 15 pm. A fiber Bragg grating (FBG) may be formed in the central core 11. This makes it possible to achieve an optical fiber 1 suitably applicable to fiber sensing. Of course, the optical fiber 1 is also suitably applicable to communication. In this case, the FBG is not required to be formed in the central core 11.

The non-central cores 12 are columnar (for example, cylindrical) structures which are formed in positions other than the center axis of the optical fiber 1 and which each have a refractive index higher than that of the clad. Fig. 1 shows two non-central cores 12a and 12b as an example of the non-central cores 12. For example, as in the case of the central core 11, the non-central cores 12 are made of quartz glass containing updopant, such as germanium (Ge). Note that in a case where the clad 13 contains downdopant, the non-central cores 12 may be made of pure quartz glass. In the helical section I0, the non-central cores 12 each have a helical shape turning around the center axis of the optical fiber 1. On the other hand, in the first non-helical section I1 and the second non-helical section I2, the non-central cores 12 each have a linear shape parallel to the center axis of the optical fiber 1. By the non-central cores 12, two light paths each having a helical shape turning around the center axis of the optical fiber 1 are formed inside the optical fiber 1. Polarization mode dispersion in the helical section I0 tends to be smaller than polarization mode dispersion in each of the non-helical sections I1 and I2, and polarization mode dispersion in each of the non-helical sections I1 and I2 tends to be greater than polarization mode dispersion in the helical section I0.

Note that the diameter of each non-central core 12 is, for example, not less than 5 pm and not more than 15 pm.

Note, however, that the diameter of the non-central core 12 can be determined as appropriate and is not limited to not less than 5 pm and not more than 15 pm. Further, the non-central cores 12 and the central core 11 may have the same diameter or may have different diameters. A distance d (hereinafter, also referred to as "center-to-center distance d") between the center axis of the clad 13 in the helical section I0 and the center axis of the non-central core 12 in the helical section I0 is, for example, 35 pm. Note, however, that the center-to-center distance d can be determined as appropriate and is not limited to 35 pm. The center-to-center distance d is, for example, (i) preferably greater than 0 pm (it is preferable that the center of the non-central core 12 is spaced from the center of the clad 13), (ii) more preferably not less than 0.5 pm, and (iii) still more preferably not less than a half of the core diameter (a diameter of the central core 11 or a diameter of the non-central core 12). Further, the center-to-center distance d is, for example, preferably not more than 35 pm.

For example, the center-to-center distance d is only required to be determined as appropriate considering crosstalk between the cores, a difference in light path length between the central core 11 and each non-central core 12, a difference between amounts by which the central core 11 and the non-central core 12 are deformed when the optical fiber 1 bends, and the like. A fiber Bragg grating (FBG) may be formed in the non-central core 12. This makes it possible to achieve an optical fiber 1 suitably applicable to fiber sensing. Of course, the optical fiber 1 is also suitably applicable to communication. In this case, the FBG is not required to be formed in the non-central core 12.

In a case where the optical fiber 1 includes a plurality of non-central cores 12, these plurality of non-central cores 12 are, for example, provided at regular intervals on a periphery of a circle with a radius d in each cross-section orthogonal to the center axis of the optical fiber 1. The illustrated optical fiber 1 includes two non-central cores 12a and 12b. Note, however, that the number of non-central cores 12 can be determined as appropriate and is not limited to 2. The number of the helices of each non-central core 12 per unit length in the helical section I0 is, for example, 50 turns/m. In other words, an interval of the non-central core 12 in the helical section I0 (a length of the optical fiber 1 in a lengthwise direction per one turn) is, for example, 20 mm. Note, however, that the number of the helices of each non-central core 12 per unit length can be determined as appropriate and is not limited to 50 turns/m. Further, the number of the helices of the non-central core 12a per unit length and the number of the helices of the non-central core 12b per unit length may or may not be identical with each other.

The clad 13 is a columnar (for example, cylindrical) structure in which the central core 11 and the non-central cores 12 are embedded. The clad 13 is made of, for example, pure quartz glass. Note that in a case where the central core 11 and the non-central cores 12 are made of pure quartz glass, the clad 13 may be made of quartz glass containing downdopant. Further, an outer side surface of the clad 13 may be covered with an unillustrated coating.

In some cases, a connector is attached to an end part of the optical fiber 1 in order to facilitate connection with another optical fiber. The connector is attached by fixing the optical fiber to a ferrule with use of, for example, an adhesive after (i) inserting the optical fiber 1 into the ferrule and then positioning the non-central cores 12 in a rotation direction or (ii) positioning the non-central cores 12 in a rotation direction and then inserting the optical fiber 1 into the ferrule. Therefore, the optical fiber 1 is fixed to the connector so as to be incapable of being rotated or be difficult to rotate. Thereafter, excess-length adjustment and/or end-surface polishing are carried out. In the excess-length adjustment, for example, a part protruding from the ferrule within the optical fiber 1 is cut. In the end-surface polishing, end surfaces of the optical fiber 1 and the ferrule are processed to have shapes suitable for connection. The end surfaces of the optical fiber 1 and the ferrule may be polished again in order to remove foreign matters on or damage to the end surface of the optical fiber 1. If such excess-length adjustment and/or end-surface polishing are carried out in a state where the non-helical sections I1 and I2 are absent and a connector is attached in the helical section I0, positions of the non-central cores 12 change in a circumferential direction relative to the connector.

In contrast, the optical fiber 1 in accordance with the present embodiment includes, at end parts thereof, the non-helical sections I1 and I2 in which the non-central cores 12 each have a linear shape. Therefore, the connector is attached not in the helical section I0 but in the non-helical section I1 or I2 so as to be incapable of being rotated or be difficult to rotate. Therefore, it is possible to suppress change in the positions of the non-central cores 12 in an end surface relative to the connector which may occur due to the excess-length adjustment and/or end-surface polishing. Further, the optical fiber 1 includes, at a middle part thereof, the helical section I0 in which the non-central cores 12 each have a helical shape. Therefore, it is possible to suppress polarization mode dispersion.

Note that the length of the helical section I0 is preferably larger than that of the first non-helical section I1 and that of the second non-helical section I2. This makes it possible to further enhance the effect of suppressing polarization mode dispersion. For example, ITU-T G.654.A and G.657.B specify that the upper limit value of polarization mode dispersion is 0.50 ps/sqrt (km). Further, for example, ITU-T G.652.B, G.652.D, G.654.B, G.654.C, G.654.D, G.654.E, and G.657.B specify that the upper limit value of polarization mode dispersion is 0.20 ps/sqrt (km). Therefore, the polarization mode dispersion is preferably not more than 0.50 ps/sqrt (km), is more preferably not more than 0.20 ps/sqrt (km), and is still more preferably not more than 0.10 ps/sqrt (km). Note that the helical section I0 can be also defined as a section in which polarization mode dispersion is 0.50 ps/sqrt (km), and each non-helical section I1 and I2 can be also defined as a section in which polarization mode dispersion is greater than 0.50 ps/sqrt (km).

Note that in the present embodiment, the optical fiber 1 including the helical section I0, the first non-helical section I1, and the second non-helical section I2 is described. However, the present invention is not limited to this. For example, one of the first non-helical section I1 and the second non-helical section I2 can be omitted. That is, the present invention also encompasses, in its scope, an optical fiber 1 including only the helical section I0 and the first non-helical section I1; and an optical fiber 1 including only the helical section I0 and the second non-helical section I2. The present invention also encompasses, in its scope, an optical fiber 1 in which the first non-helical section I1 is replaced with a first gently helical section I3 described later or in which the second non-helical section I2 is replaced with a second gently helical section I4 described later. In addition, it is preferable that the core arrangement, the core shapes, the mode field diameter (MFD), the clad shape, and the clad diameter are identical or substantially identical between the first non-helical section I1 and the second non-helical section I2. This is because this identicalness makes it possible to suppress a connection loss.

In the present embodiment, the optical fiber 1 including the central core 11 and the non-central cores 12 is described. However, the present invention is not limited to this. For example, the central core 11 can be omitted. That is, the present invention also encompasses, in its scope, an optical fiber 1 including only the non-central cores 12. Further, in the present embodiment, the optical fiber 1 including the plurality of non-central cores 12 is described. However, the present invention is not limited to this. That is, the present invention also encompass, in its scope, an optical fiber 1 including a single non-central core 12.

In other words, (i) a single core fiber including a single non-central core 12, (ii) a multicore fiber including a plurality of non-central cores 12, (iii) a multicore fiber including a single non-central core 12 and a single central core 11, and (iv) a multicore fiber including a plurality of non-central cores 12 and a single central core 11 are all encompassed in the scope of the present invention. Note that in the optical fibers (i) to (iv) above, each core may be a single mode core designed to transmit only a single mode (a fundamental mode) or may be a multimode core designed to transmit a plurality of modes (a fundamental mode and a higher order mode). Further, each multicore fiber (ii) to (iv) above may be a coupled multicore fiber designed to cause the cores thereof to be optically coupled to each other or may be an uncoupled multicore fiber designed to cause the cores thereof not to be optically coupled to each other. Each of the optical fibers includes at least one helical core and thus is encompassed in the scope of application of the present invention.

(Two aspects of optical fiber)

The optical fiber 1 may have at least the following aspects.

A first aspect is an aspect of being constituted by an optical fiber 1A including the helical section I0, a second optical fiber 1B including the first non-helical section I1, and an optical fiber 1C including the second non-helical section I2. In this case, the optical fiber 1 includes a connection area between the optical fiber 1A and the optical fiber 1B and a connection area between the optical fiber 1A and the optical fiber 1C.

A second aspect is an aspect of being constituted by a single optical fiber 1D including the helical section I0, the first non-helical section I1, and the second non-helical section I2. In this case, the optical fiber 1 includes neither a connection area between the helical section I0 and the first non-helical section I1 nor a connection area between the helical section I0 and the second non-helical section I2.

Fig. 2 is a perspective view illustrating an example of a method for manufacturing the optical fiber 1 in accordance with the first aspect. In the manufacturing method illustrated in Fig. 2, the optical fiber 1A including the helical section I0, the second optical fiber 1B including the first non-helical section I1, and the optical fiber 1C including the second non-helical section I2 are used as materials.

The manufacturing method illustrated in Fig. 2 includes (i) a connection step S1 of connecting the optical fiber 1B with a first end part of the optical fiber 1A and (ii) a connection step S2 of connecting the optical fiber 1C with a second end part of the optical fiber 1A. The connection in the connection step S1 and the connection in the connection step S2 may each be connection using a connector, or may be connection using an adhesive, or may be connection using fusion.

The optical fiber 1 in accordance with the first aspect has an advantage that it is easy to cause a refractive index profile in the helical section I0 to differ from refractive index profiles in the non-helical sections I1 and I2. Therefore, it is possible to achieve the optical fiber 1 in which a refractive index profile thereof has a high degree of flexibility.

In each of the non-helical sections I1 and I2 in which the non-central cores 12 each have a linear shape, crosstalk is more likely to occur when the section bends than in the helical section I0 in which the non-central cores 12 each have a helical shape. Therefore, it is preferable that a configuration in which the non-central cores 12 in the non-helical sections I1 and I2 have effective refractive indices higher than those of the non-central cores 12 in the helical section I0 is employed so as to suppress worsening of crosstalk. The optical fiber 1 in accordance with the first aspect makes it possible to easily achieve such a configuration. This is because, for example, it is only required that an optical fiber having a step index-type refractive index distribution is used as the optical fiber 1A that makes up the helical section I0, and optical fibers in which trench layers and/or depressed layers are formed around the non-central cores 12 and in which the non-central cores 12 each have an effective refractive index higher than that of the optical fiber 1A are used as the optical fibers 1B and 1C that make up the non-helical sections I1 and I2, respectively. Typically, a more complicated refractive index profile leads to a higher cost of manufacture. Use of the configuration above makes it possible to reduce the cost as an optical fiber connecting member as compared with a case where an optical fiber in which the trench layer and/or the depressed layer are formed also in the helical section is used. Note that the description here applies also to Embodiment 2 described later with the non-helical sections I1 and I2 read as gently helical sections I3 and I4.

On the other hand, the fiber 1 in accordance with the second aspect makes it possible to reduce the number of the connection areas and thus has an advantage that it is easy to suppress a loss which occurs in a connection area.

Note that a structure may or may not be attached to the end parts of the optical fiber 1. Here, the structure may be the above-described connector or may be a structure other than a connector. Examples of the structure other than a connector include a V-groove array and a fiber holder. In particular, in a case where a connector is attached to an end part of the optical fiber 1, a process of connecting the optical fiber 1 with another optical fiber is made easier. In contrast, in a case where no connector is attached to the end parts of the optical fiber 1, saving space is made easier.

[Embodiment 2]

(Configuration of Optical fiber)

With reference to Fig. 3, the following description will discuss an optical fiber 2 in accordance with Embodiment 2 of the present invention. Fig. 3 is a perspective view illustrating the optical fiber 2.

The optical fiber 2 includes a central core 21, non-central cores 22 (one example of "at least one core" in the claims), and a clad 23. Further, the optical fiber 2 includes a helical section I0, a first gently helical section I3, and a second gently helical section I4.

The central core 21 is a columnar (in the illustrated example, cylindrical) structure which is formed along the center axis of the optical fiber 2 and which has a refractive index higher than that of the clad. The central core 21 is made of, for example, quartz glass containing updopant, such as germanium (Ge). Note that in a case where the clad 23 contains downdopant, the central core 21 may be made of pure quartz glass. In the helical section I0, the first gently helical section I3, and the second gently helical section I4, the central core 21 has a linear shape including the center axis of the optical fiber 2. By the central core 21, a linear light path including the center axis of the optical fiber 2 is formed inside the optical fiber 2.

The diameter of the central core 21 is, for example, not less than 5 pm and not more than 15 pm. Note, however, that the diameter of the central core 21 can be determined as appropriate and is not limited to not less than 5 pm and not more than 15 pm. A fiber Bragg grating (FBG) may be formed in the central core 21. This makes it possible to achieve an optical fiber 2 suitably applicable to fiber sensing. Of course, the optical fiber 2 is also suitably applicable to communication. In this case, the FBG is not required to be formed in the central core 21.

The non-central cores 22 are columnar (for example, cylindrical) structures which are formed in positions other than the center axis of the optical fiber 2 and which each have a refractive index higher than that of the clad. Fig. 3 shows two non-central cores 22a and 22b as an example of the non-central cores 22. For example, as in the case of the central core 21, the non-central cores 22 are made of quartz glass containing updopant, such as germanium (Ge). Note that in a case where the clad 23 contains downdopant, the non-central cores 22 may be made of pure quartz glass. In the helical section I0, the first gently helical section I3, and the second gently helical section I4, the non-central cores 22 each have a helical shape turning around the center axis of the optical fiber 2. Note, however, that the number of the helices of each non-central core 22 in the first gently helical section I3 and the second gently helical section I4 per unit length is smaller than the number of the helices of each non-central core 22 in the helical section I0 per unit length. By the non-central cores 22, two light paths each having a helical shape turning around the center axis of the optical fiber 2 are formed inside the optical fiber 2. Polarization mode dispersion in the helical section I0 tends to be smaller than polarization mode dispersion in each of the gently helical sections I3 and I4, and polarization mode dispersion in each of the gently helical sections I3 and I4 tends to be greater than polarization mode dispersion in the helical section I0.

Note that the diameter of each non-central core 22 is, for example, not less than 5 pm and not more than 7 pm. Note, however, that the diameter of the non-central core 22 can be determined as appropriate and is not limited to not less than 5 pm and not more than 7 pm. Further, the non-central cores 22 and the central core 21 may have the same diameter or may have different diameters. A distance d (hereinafter, also referred to as "center-to-center distance d") between the center axis of the clad 23 in the helical section I0 and the center axis of the non-central core 22 in the helical section I0 is, for example, 35 pm. Note, however, that the center-to-center distance d can be determined as appropriate and is not limited to 35 pm. The center-to-center distance d is, for example, (i) preferably greater than 0 pm (it is preferable that the center of the non-central core 22 is spaced from the center of the clad 23), (ii) more preferably not less than 0.5 pm, and (iii) still more preferably not less than a half of the core diameter (a diameter of the central core 21 or a diameter of the non-central core 22). Further, the center-to-center distance d is, for example, preferably not more than 35 pm.

For example, the center-to-center distance d is only required to be determined as appropriate considering crosstalk between the cores, a difference in light path length between the central core 21 and each non-central core 22, a difference between amounts by which the central core 21 and the non-central core 22 are deformed when the optical fiber 2 bends, and the like. A fiber Bragg grating (FBG) may be formed in the non-central core 22. This makes it possible to achieve an optical fiber 2 suitably applicable to fiber sensing. Of course, the optical fiber 2 is also suitably applicable to communication. In this case, the FBG is not required to be formed in the non-central core 22.

In a case where the optical fiber 2 includes a plurality of non-central cores 22, these plurality of non-central cores 22 are, for example, provided at regular intervals on a periphery of a circle with a radius d in each cross-section orthogonal to the center axis of the optical fiber 2. The illustrated optical fiber 2 includes two non-central cores 22a and 22b. Note, however, that the number of non-central cores 22 can be determined as appropriate and is not limited to 2. The number of the helices of each non-central core 22 per unit length in the helical section l0 is, for example, 50 turns/m. In other words, an interval of the non-central core 22 in the helical section l0 (a length of the optical fiber 2 in a lengthwise direction per one turn) is, for example, 20 mm. Note, however, that the number of the helices of each non-central core 22 per unit length can be determined as appropriate and is not limited to 50 turns/m. Further, the number of the helices of the non-central core 22a per unit length and the number of the helices of the non-central core 22b per unit length may or may not be identical with each other.

The clad 23 is a columnar (for example, cylindrical) structure in which the central core 21 and the non-central cores 22 are embedded. The clad 23 is made of, for example, quartz glass. Note that an outer side surface of the clad 23 may be covered with an unillustrated coating.

As described above, the optical fiber 2 in accordance with the present embodiment includes, at end parts thereof, the gently helical sections l3 and l4 each having a helical shape in which the number of the helices of each non-central core 22 per unit length is smaller than the number of the helices of each non-central core 22 per unit length in the helical section l0. Therefore, the connector is attached not in the helical section l0 but in the gently helical section l3 or l4 so as to be incapable of being rotated or be difficult to rotate. Therefore, it is possible to suppress change in the positions of the non-central cores 22 in an end surface relative to the connector which may occur due to the excess-length adjustment and/or end-surface polishing. Further, the optical fiber 2 includes, at a middle part thereof, the helical section l0 in which the non-central cores 22 each have a helical shape. Therefore, it is possible to suppress polarization mode dispersion. In particular, the optical fiber 2 in accordance with the present embodiment has the non-central cores 22 that each have a helical shape also in sections other than the helical section l1 (that is, the gently helical sections l3 and l4), and thus makes it possible to more efficiently suppress polarization mode dispersion than the optical fiber 1 in accordance with Embodiment 1 which has the non-central cores 12 that each have a linear shape in sections other than the helical section (that is, the non-helical sections l1 and l2).

Assuming that the center-to-center distance is d [m], the number of turns (synonymous with the number of helices) of each non-central core 22 per unit length in each of the gently helical sections l3 and l4 is s [turns/m] and that an amount of a change in fiber length due to the excess-length adjustment and/or end-surface polishing is $\Delta l$ [m], a displacement amount $\Delta r$ [m] of the non-central core 22 in an end surface due to the excess-length adjustment and/or end-surface polishing is given by Equation (1) below according to the law of cosines. When Equation (1) is solved with respect to the number s of turns, Equation (2) below is obtained.

$$\Delta r^2 = 2d^2\{1 - \cos(2\pi s \Delta l)\} \quad \cdots (1)$$

$$s = \frac{1}{2\pi\Delta l}\cos^{-1}\left(1 - \frac{\Delta r^2}{2d^2}\right) \quad \cdots (2)$$

In order to sufficiently suppress increase of a connection loss, the displacement amount $\Delta r$ of each non-central core 22 in an end surface is preferably not more than 0.1 pm. That is, the number s of turns preferably satisfies the following inequality expression (3).

$$s \le \frac{1}{2\pi\Delta l}\cos^{-1}\left(1 - \frac{(0.1 \times 10^{-6})^2}{2d^2}\right) \quad \cdots (3)$$

The following will assume an optical fiber 2 in which in each cross-section thereof, the non-central cores 22 are provided at the vertices of a square having 40-pm sides. In this case, the center-to-center distance d is approximately 28.3 pm. When the right side of the inequality expression (3), that is, the upper limit smax of the number s of turns where the displacement amount $\Delta r$ of the non-central core 22 in an end surface is not more than 0.1 pm is calculated for each case where the fiber length change amounts $\Delta l$ are 30 pm, 50 pm, 100 pm, 200 pm, 1000 pm, 3000 pm, 5000 pm, and 10000 pm, Table 1 below is obtained.

[Table 1]

| $\Delta l$ [$\mu$m] | 30 | 50 | 100 | 200 | 1000 | 3000 | 5000 | 10000 |
|---|---|---|---|---|---|---|---|---|
| $S_{max}$ [turns/m] | 18.76 | 11.25 | 5.63 | 2.81 | 0.56 | 0.19 | 0.11 | 0.06 |

For example, in a case where only the end-surface polishing is carried out, the fiber length change amount $\Delta l$ is approximately 30 pm to 200 pm. In a case where the fiber length change amount $\Delta l$ is 30 pm, the amount s of turns (synonymous with the number of helices) of not more than 18.76 turns enables the displacement amount $\Delta r$ of the non-central core 22 in an end surface to be not more than 0.1 pm. In a case where the fiber length change amount $\Delta l$ is 50 pm, the amount s of turns of not more than 11.25 turns enables the displacement amount $\Delta r$ of the non-central core 22 in an end surface to be not more than 0.1 pm. In a case where the fiber length change amount $\Delta l$ is 100 pm, the amount s of turns of not more than 5.63 turns enables the displacement amount $\Delta r$ of the non-central core 22 in an end surface to be not more than 0.1 pm. In a case where the fiber length change amount $\Delta l$ is 200 pm, the amount s of turns of not more than 2.81 turns enables the displacement amount $\Delta r$ of the non-central core 22 in an end surface to be not more than 0.1 pm.

Further, in a case where the excess-length adjustment is carried out, the fiber length change amount $\Delta l$ is approximately 1 mm to 10 mm. In a case where the fiber length change amount $\Delta l$ is 1 mm, the amount s of turns of not more than 0.56 turns enables the displacement amount $\Delta r$ of the non-central core 22 in an end surface to be not more than 0.1 pm. In a case where the fiber length change amount $\Delta l$ is 3 mm, the amount s of turns of not more than 0.19 turns enables the displacement amount $\Delta r$ of the non-central core 22 in an end surface to be not more than 0.1 pm. In a case where the fiber length change amount $\Delta l$ is 5 mm, the amount s of turns of not more than 0.11 turns enables the displacement amount $\Delta r$ of the non-central core 22 in an end surface to be not more than 0.1 pm. In a case where the fiber length change amount $\Delta l$ is 10 mm, the amount s of turns of not more than 0.06 turns enables the displacement amount $\Delta r$ of the non-central core 22 in an end surface to be not more than 0.1 pm. Note that, in light of the fact that in many cases, the fiber length change amount $\Delta l$ due to the excess-length adjustment is less than 10 mm, the length of each gently helical section l3 and l4 is preferably not less than 10 mm. This is because this length makes it possible to reduce a possibility that the gently helical sections l3 and l4 disappear in the excess-length adjustment. The same applies to the non-helical sections l1 and l2 in Embodiment 1.

The length of the helical section l0 is preferably longer than that of the first gently helical section l3 and that of the second gently helical section l4. This makes it possible to further enhance the effect of suppressing polarization mode dispersion. For example, ITU-T G.654.A and G.657.B specify that the upper limit value of polarization mode dispersion is 0.50 ps/sqrt (km). Further, for example, ITU-T G.652.B, G.652.D, G.654.B, G.654.C, G.654.D, G.654.E, and G.657.B specify that the upper limit value of polarization mode dispersion is 0.20 ps/sqrt (km). Therefore, the length of the helical section l0 is preferably set so that polarization mode dispersion becomes not more than 0.50 ps/sqrt (km) and is more preferably set so that polarization mode dispersion becomes not more than 0.20 ps/sqrt (km).

Note that in the present embodiment, the optical fiber 2 including the helical section l0, the first gently helical section l3, and the second gently helical section l4 is described. However, the present invention is not limited to this. For example, one of the first gently helical section l3 and the second gently helical section l4 can be omitted. That is, the present invention also encompasses, in its scope, an optical fiber 2 including only the helical section l0 and the first gently helical section l3; and an optical fiber 2 including only the helical section l0 and the second gently helical section l4. In addition, it is preferable that the core arrangement, the core shapes, the mode field diameter (MFD), the clad shape, and the clad diameter are identical or substantially identical between the first gently helical section l3 and the second gently helical section l4. This is because this identicalness makes it possible to suppress a connection loss.

In the present embodiment, the optical fiber 2 including the central core 21 and the non-central cores 22 is described. However, the present invention is not limited to this. For example, the central core 21 can be omitted. That is, the present invention also encompasses, in its scope, an optical fiber 2 including only the non-central cores 22. Further, in the present embodiment, the optical fiber 2 including the plurality of non-central cores 22 is described. However, the present invention is not limited to this. That is, the present invention also encompass, in its scope, an optical fiber 2 including a single non-central core 22.

In other words, (i) a single core fiber including a single non-central core 22, (ii) a multicore fiber including a plurality of non-central cores 22, (iii) a multicore fiber including a single non-central core 22 and a single central core 21, and (iv) a multicore fiber including a plurality of non-central cores 22 and a single central core 21 are all encompassed in the scope of the present invention.

Note that a structure (connector) may be attached to an end part of the optical fiber 2, or no structure may be attached to the end parts. Here, the structure may be the above-described connector or may be a structure other than a connector. Examples of the structure other than a connector include a V-groove array and a fiber holder. In particular, in a case where a connector is attached to the end part of the optical fiber 2, a process of connecting the optical fiber 2 with another optical fiber is made easier. In contrast, in a case where no connector is attached to the end parts of the optical fiber 2, saving space is made easier.

(Complement of definition of helical section I0 and gently helical sections I3 and I4)

The following will complement definitions of the helical section I0 and the gently helical sections I3 and I4 of a case where the number of the helices of each non-central core 22 per unit length is not uniform. In this case, for example, an average or median value of the numbers of the helices of each non-central core 22 per unit length throughout the entire optical fiber 2 is calculated, and the value is regarded as a representative value. Alternatively, in a case where the number of the helices of each non-central core 22 periodically changes, an average or median value of the number of the helices of each non-central core 22 per unit length for one cycle is calculated, and the value is regarded as a representative value. For example, a section in which the number of the helices of each non-central core 22 per unit length is greater than the above-described representative value is regarded as the helical section I0. Further, for example, among the sections in which the number of the helices of each non-central core 22 per unit length is smaller than the above-described representative value, a section including one end part of the optical fiber 2 is regarded as the gently helical section I3. Alternatively, among the sections in which the number of the helices of each non-central core 22 per unit length is smaller than a value $\alpha$ times larger than the above-described representative value, a section including one end part of the optical fiber 2 is regarded as the gently helical section I3. Here, $\alpha$ is an actual number of greater than 0 and smaller than 1; for example, 0.1. The gently helical section I4 can be also defined as in the case of the gently helical section I3.

(Two aspects of optical fiber)

The optical fiber 2 may have at least the following aspects.

A first aspect is an aspect of being constituted by an optical fiber 2A including the helical section I0, a second optical fiber 2B including the first gently helical section I3, and an optical fiber 2C including the second gently helical section I4. In this case, the optical fiber 2 includes a connection area between the optical fiber 2A and the optical fiber 2B and a connection area between the optical fiber 2A and the optical fiber 2C.

A second aspect is an aspect of being constituted by a single optical fiber 2D including the helical section I0, the first gently helical section I3, and the second gently helical section I4. In this case, the optical fiber 2 includes neither a connection area between the helical section I0 and the first gently helical section I3 nor a connection area between the helical section I0 and the second gently helical section I4.

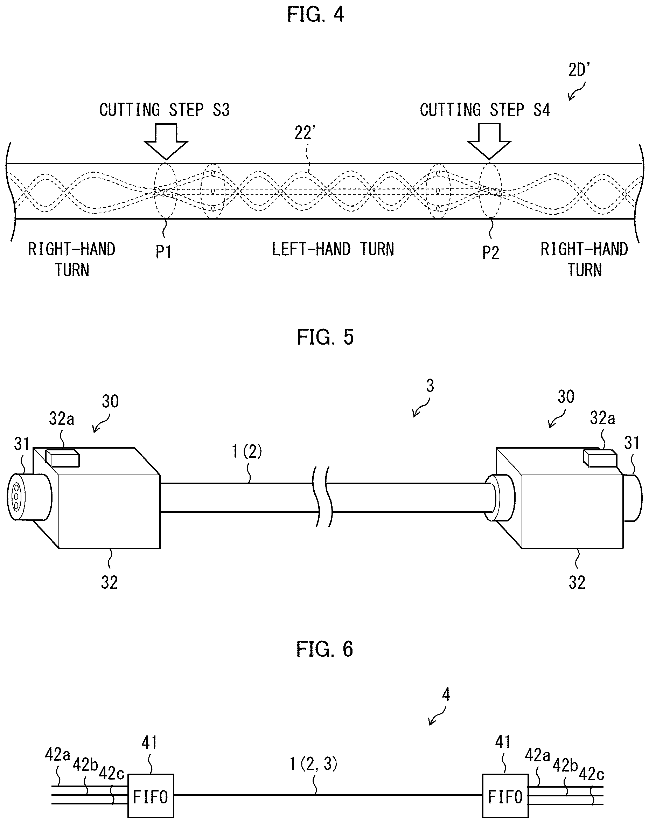

Fig. 4 is a perspective view illustrating an example of a method for manufacturing the optical fiber 2 in accordance with the second aspect. In the manufacturing method illustrated in Fig. 4, an optical fiber 2D' including points P1 and P2 at which a turning direction of each of non-central cores 22' is reversed is used as a material.

The manufacturing method illustrated in Fig. 4 includes (i) a cutting step S3 of cutting the optical fiber 2D' at the point P1 at which a turning direction of each non-central core 22' is reversed and (ii) a cutting step S4 of cutting the optical fiber 2D' at the point P2 at which a turning direction of each non-central core 22' is reversed. In the vicinities of the points P1 and P2 at which a turning direction of each non-central core 22' is reversed, the number of the helices of each non-central core 22' per unit length becomes relatively small. Therefore, through the manufacturing method illustrated in Fig. 4, it is possible to manufacture the optical fiber 2 that includes the helical section I0, the first gently helical section I3, and the second gently helical section I4. Note that in a case where the present manufacturing method is employed, a cross-section of the clad of the optical fiber 2D' preferably has a noncircular shape (for example, an elliptical shape). This is because when the cross-section of the clad of the optical fiber 2D' has a noncircular shape, it becomes easier to, from an appearance of the optical fiber D2', specify the point P2 at which a turning direction of each non-central core 22' is reversed. Note that in a case where such an optical fiber 2D' is used as a material, a cross-section of the clad of the optical fiber 2 also has a noncircular shape. Therefore, it is also possible to easily specify the gently helical sections I3 and I4 in the manufactured optical fiber 2 from an appearance of the optical fiber 2.

Note that it is only required that the optical fiber 2D' includes a helical section in which the non-central cores 22' each have a helical shape and a gently helical section in which the number of the helices of each non-central core 22' per unit length is smaller than that in the helical section. Further, it is only required that an area at which the optical fiber 2D' is cut in the above-described cutting step S4 is a point within the gently helical section. Be aware that a condition of including an end part of the optical fiber 2 is imposed on the above-described gently helical sections I3 and I4, while the condition of including an end part of the optical fiber 2 is not imposed on the gently helical section in question here. Further, in a case where a cross-section of the clad of the optical fiber 2D' has a noncircular shape, it is possible to specify the number of the helices of each component of the optical fiber 2D' from an appearance of the optical fiber 2D'. This also makes it easy to specify a position of the gently helical section in the optical fiber 2D'.

For example, in the optical fiber 2D', in a case where a section in which the non-central cores 22' turn to the right and a section in which the non-central cores 22' turn to the left alternately appear, the vicinity of the point P1 at which a turning direction of the non-central cores 22' is reversed is regarded as the gently helical section. Alternatively, in the optical fiber 2D', in a case where a turning direction of the non-central cores 22' is uniform, and the number of the helices of each non-central core 22' per unit length periodically changes, the vicinity of a point at which the number of the helices of each non-central core 22' per unit length takes a minimum value is regarded as the gently helical section. Still alternatively, in the optical fiber 2D', in a case where a section in which the non-central cores 22 each have a linear shape is intermittently included, the section in which the non-central cores 22 each have a linear shape is regarded as the gently helical section. In this case, a turning direction of the non-central cores 22 in a section in which the non-central cores 22 each have a helical shape may be solely a right-hand turn, or may be solely a left-hand turn, or may be a combination of a right-hand turn and a left-hand turn.

Note that the definitions of a helical section and a gently helical section in the optical fiber 2D' of a case where the number of the helices of each non-central core 22' per unit length is not uniform are also similar to the definitions of the gently helical sections I3 and I4 in the optical fiber 2 of a case where the number of the helices of each non-central core 22 per unit length is not uniform. However, a difference between the definitions of the both is only that each gently helical section I3 and I4 of the optical fiber 2 is required to include an end part of the optical fiber 2, while the gently helical section of the optical fiber 2D is not required to include an end part of the optical fiber 2D.

The optical fiber 2 in accordance with the first aspect has an advantage that it is easy to cause a refractive index profile in the helical section I0 to differ from refractive index profiles in the gently helical sections I3 and I4. On the other hand, the fiber 1 in accordance with the second aspect makes it possible to reduce the number of the connection areas and thus has an advantage that it is easy to suppress a loss which occurs in a connection area.

Note that the helical section I0 of the optical fiber 2 may include, in an alternating pattern, a section in which the non-central cores 12 turn to the right and a section in which the non-central cores 12 turn to the left. In this case, cutting the optical fiber 2 at a point at which a turning direction of the non-central cores 22 is reversed can suppress, to be small, the number of the helices of each non-central core 22 per unit length in the vicinity of an end surface newly generated through the cutting. Therefore, it is possible to, in the end surface newly generated through the cutting, suppress change in positions of the non-central cores 22 which may occur due to the excess-length adjustment and/or end-surface polishing.

[Application examples]

(Connector-attached optical fiber)

With reference to Fig. 5, the following description will discuss a connector-attached optical fiber 3 including the optical fiber 1 (see Fig. 1). Fig. 5 is a perspective view illustrating a configuration of the connector-attached optical fiber 3 including the optical fiber 1.

The connector-attached optical fiber 3 includes an optical fiber 1 and connectors 30. A connector 30 may be provided to an end part of the optical fiber 1. Alternatively, connectors 30 may be provided to both ends of the optical fiber 1. Fig. 5 illustrates a configuration of the latter.

The connectors 30 each include a ferrule 31 and a housing 32. The ferrule 31 is an annular member in which a fiber hole into which an end part of the optical fiber 1 is inserted is formed. The housing 32 is a rectangular parallelepiped member accommodating the ferrule 31. A key 32a is formed on a side surface of the housing 32. The key 32a is a rectangular parallelepiped protrusion that prevents incorrect connection with another optical fiber to be connected and that positions the another optical fiber to be connected. The positions of the non-central cores 12a and 12b in an end surface of the optical fiber 1 are aligned with respect to the key 32a provided to the housing 32. Note that the key 32a is described as a protrusion on the assumption that a recess to be fitted with the key 32a is provided on an adaptor side. However, this should not be construed as a limitation. In a case where a protrusion to be fitted with the key 32a is provided on the adaptor side, the key 32a may be a recess.

Here, the ferrule 31 is fixed to (integrated with) an end part of the optical fiber 1 such that one end surface of the ferrule 31 is flush with the end surface of the optical fiber 1. The ferrule 31 is accommodated in the housing 32 so that rotation about an axis of the ferrule 31 does not occur or is unlikely to occur. The fact that the rotation about an axis of the ferrule 31 does not occur or is unlikely to occur eliminates or reduces the likelihood of occurrence of rotation about an axis of the optical fiber 1 integrated with the ferrule 31.

The lengths of the non-helical sections I1 and I2 of the optical fiber 1 may be lengths that allow the entire non-helical sections I1 and I2 to be accommodated inside the respective connectors 30 or may be lengths that allows only parts of the non-helical sections I1 and I2 to be accommodated inside the respective connectors 30. The former case allows connection areas between the non-helical sections I1 and I2 and the helical section I0 to be accommodated in the respective connectors 30, and thus has an advantage in terms of strength.

The connector-attached optical fiber 3 may raise a problem in that in a case where a foreign matter incapable of being removed or difficult to remove is attached to an end surface of the optical fiber 1 or in a case where a core of the optical fiber 1 is damaged, a connection loss at connector fitting is increased. In this case, polishing the end surface of the optical fiber 1 together with the ferrule 31 may be able to solve the problem. In this case, if the end part of the optical fiber 1 is within the non-helical section I1 or I2, it is possible to suppress change in positions of the non-central cores 12a and 12b relative to the key 32a which may occur by polishing the end surface of the optical fiber 1 again. Thus, it is possible to reduce a possibility of raising a problem in that the re-polishing increases the connection loss at connector fitting.

Note that the connector-attached optical fiber 3 including the optical fiber 1 is described here, but also a connector-attached optical fiber including the optical fiber 2 can be similarly achieved. However, in some cases, the above excess-length adjustment and/or end-surface polishing for the optical fiber 1 is carried out after the connectors 30 have been attached. In this case, change in positions of the non-central cores 12 in an end surface of the optical fiber 1 which may occur due to the excess-length adjustment and/or end-surface polishing results in misalignment between the positions of the non-central cores 12 and the position of the key 32a. Therefore, it is preferable to use the optical fiber 1 in which it is more unlikely that the change in the positions of the non-central cores 12 due to the end-surface polishing occur. Note that in the present application example, a single-fiber connector is used, but a multi-fiber connector, such as an MPO connector, may be used. The optical fibers 1 and/or 2 may be used for all the cores of the multi-fiber connector. Alternatively, the optical fibers 1 and/or 2 may be used for some of the cores of the multi-fiber connector.

(Optical device)

With reference to Fig. 6, the following description will discuss an optical device 4 including the optical fiber 1 (see Fig. 1). Fig. 6 is a block diagram illustrating a configuration of the optical device 4.

The optical device 4 includes the optical fiber 1, fan-in/fan-out devices 41, and single core fibers 42a to 42c. A fan-in/fan-out device 41 and single core fibers 42a to 42c may be provided to one end of the optical fiber 1. Alternatively, fan-in/fan-out devices 41 and single core fibers 42a to 42c may be provided to both ends of the optical fiber 1. Fig. 6 illustrates a configuration of the latter.

Each of the fan-in/fan-out devices 41 is a device for connecting a plurality of cores of the multicore fiber and a plurality of single core fibers. In the configuration illustrated in Fig. 6, the fan-in/fan-out device 41, for example, (i) connects the central core 11 of the optical fiber 1 and the single core fiber 42a, (ii) connects the non-central core 12a of the optical fiber 1 and the single core fiber 42b, and (iii) connects the non-central core 12b of the optical fiber 1 and the single core fiber 42c.

Note that the optical device 4 including the optical fiber 1 is described here, but also an optical device including the optical fiber 2 and an optical device including the connector-attached optical fiber 3 can be similarly achieved. In the optical device including the optical fiber 1 or 2, the optical fiber 1 or 2 and the fan-in/fan-out devices 41 are fusion-spliced to each other or are connected with each other through an adhesion. On the other hand, in an optical device including the connector-attached optical fiber 3, the optical fiber 1 or 2 and the fan-in/fan-out devices 41 are connected with each other through connectors. Therefore, in the latter case, connectors complementary to the connectors 30 are provided also on a fan-in/fan-out device 41 side. In either case, it is unlikely that change in positions of the non-central cores 12 in an end surface of the optical fiber 1 which may occur due to the end-surface polishing occurs, and thus it becomes easier to connect the optical fiber 1 or 2 and the fan-in/fan-out devices 41.

Aspects of the present invention can also be expressed as follows:

An optical fiber in accordance with Aspect 1 of the present invention is an optical fiber including at least one core, the optical fiber including: a helical section in which the at least one core has a helical shape; and a first non-helical section in which the at least one core has a linear shape and which includes a first end part of the optical fiber or a first gently helical section in which the number of helices of the at least one core per unit length is smaller than that in the helical section and which includes the first end part of the optical fiber.

In an optical fiber in accordance with Aspect 2 of the present invention, in addition to the configuration of Aspect 1, a configuration is employed of including a first optical fiber that includes the helical section and a second optical fiber that includes the first non-helical section or the first gently helical section and including a connection area between the first optical fiber and the second optical fiber.

In an optical fiber in accordance with Aspect 3 of the present invention, in addition to the configuration of Aspect 1, a configuration is employed of including an optical fiber that includes: the helical section; and the first non-helical section or the first gently helical section and including no connection area between the helical section and the first non-helical section or the first gently helical section.

In an optical fiber in accordance with Aspect 4 of the present invention, in addition to the configuration of any one of Aspects 1 to 3, a configuration is employed of further including a second non-helical section in which the at least one core has a linear shape and which includes a second end part of the optical fiber or a second gently helical section in which the number of the helices of the at least one core per unit length is smaller than that in the helical section and which includes the second end part of the optical fiber.

In an optical fiber in accordance with Aspect 5 of the present invention, in addition to the configuration of Aspect 4, a configuration is employed of including a first optical fiber that includes the helical section and a third optical fiber that includes the second non-helical section or the second gently helical section and including a connection area between the first optical fiber and the third optical fiber.

In an optical fiber in accordance with Aspect 6 of the present invention, in addition to the configuration of Aspect 4, a configuration is employed of including an optical fiber that includes: the helical section; and the second non-helical section or the second gently helical section and including no connection area between the helical section and the second non-helical section or the second gently helical section.

In an optical fiber in accordance with Aspect 7 of the present invention, in addition to the configuration of any one of Aspects 1 to 6, a configuration is employed in which the helical section has a length longer than that of the first non-helical section or the first gently helical section.

In an optical fiber in accordance with Aspect 8 of the present invention, in addition to the configuration of any one of Aspects 1 to 6, a configuration is employed in which the helical section has a length shorter than that of the first non-helical section or the first gently helical section.

In an optical fiber in accordance with Aspect 9 of the present invention, in addition to the configuration of any one of Aspects 1 to 8, a configuration is employed in which the helical section includes, in an alternating pattern, a section in which the at least one core turns to right and a section in which the at least one core turns to left.

In an optical fiber in accordance with Aspect 10 of the present invention, in addition to the configuration of any one of Aspects 1 to 9, a configuration is employed of further including a clad surrounding the at least one core, wherein in the helical section, a center of the at least one core is spaced from a center of the clad.

In an optical fiber in accordance with Aspect 11 of the present invention, in addition to the configuration of any one of Aspects 1 to 10, a configuration is employed in which the optical fiber is a multicore fiber including a plurality of cores, and the at least one core is any of the plurality of cores.

In an optical fiber in accordance with Aspect 12 of the present invention, in addition to the configuration of Aspect 11, a configuration is employed in which the at least one core in the first non-helical section or the first gently helical section has an effective refractive index higher than that of the at least one core in the helical section.

In an optical fiber in accordance with Aspect 13 of the present invention, in addition to the configuration of any one of Aspects 1 to 12, a configuration is employed in which the end part of the optical fiber is attached to a structure so as to be incapable of being rotated or be difficult to rotate.

An optical device in accordance with Aspect 14 of the present invention includes: the optical fiber in accordance with any one of Aspects 11 to 13; and one or a pair of fan-in/fan-out devices connected with one end or both ends of the optical fiber.

A method for manufacturing an optical device, in accordance with Aspect 15 of the present invention, the method including a cutting step of cutting an optical fiber including at least one core and including a helical section in which the at least one core has a helical shape and a gently helical section in which the number of helices of the at least one core per unit length is smaller than that in the helical section, the cutting being carried out in the gently helical section.

In an optical fiber in accordance with Aspect 16 of the present invention, in addition to the configuration of Aspect 10, a configuration is employed in which a distance between the center of the at least one core and the center of the clad is not less than 0.5 pm.

[Additional Remarks]

The present invention is not limited to the embodiments above, but can be altered by a skilled person in the art within the scope of the claims. The present application also encompasses, in its technical scope, another embodiment derived by combining technical means disclosed in the above embodiments as appropriate.

For example, the present embodiment describes the configuration in which the length of each non-helical section l1 and l2 or each gently helical section l3 and l4 is longer than that of the helical section l0, but the technical scope of the present application is not limited to this. That is, the present application also encompasses, in its technical scope, a configuration in which the length of each non-helical section l1 and l2 or each gently helical section l3 and l4 is longer than that of the helical section l0. In a case where the optical fiber l1 or l2 is cut and the cut surface is connected with another optical component (such as an optical fiber, a connector, or a fan-in/fan-out device), it is preferable to find the non-helical section l1 or l2, or the gently helical section l3 or l4 and cut the section found. In this case, the above configuration makes it easier to find the non-helical section l1 or l2, or the gently helical section l3 or l4.

Further, the present application also encompasses, in its technical scope, a manufacturing method for an optical device which includes a cutting step of cutting the optical fiber 2D including a helical core and including a point at which a turning direction of the core is reversed, at the point or in the vicinity of the point. Here, the optical device manufactured by the manufacturing method may be an optical device including the optical fiber 2D' and another optical component (such as another optical fiber, a connector, or a fan-in/fan-out device) connected with the cut surface of the optical fiber 2D'. In this case, it is possible to manufacture an optical device in which the optical fiber 2 is connected with another optical component and in which a loss at the connection point is small. Further, the optical fiber 2D' itself in which a cut surface is formed in preparation for connection with another optical component may be the optical device manufactured through this manufacturing method. In this case, it is possible to manufacture an optical device that, when connected with another optical component, has a small connection at a connection point with the another optical component.

Furthermore, the present application also encompasses, in its scope, a fiber bundle bundling a plurality of optical fibers up. In this case, it is preferable that at least one of the optical fibers is the above-described optical fiber 1 or optical fiber 2, that is, in at least one of the optical fibers, a non-helical section I1 or the gently helical section I3 is provided at one end part of the fiber bundle. This makes it easier to connect a multi-fiber connector with one end part of the fiber bundle with a low loss. In a case where in the at least one of the optical fibers, also the non-helical section I2 or the gently helical section I4 is provided at another end part of the fiber bundle, it is also easier to connect a multi-fiber connector with the another end part of the fiber bundle with a low loss. Further, in this case, it is more preferable that all of the optical fibers are the above-described optical fibers 1 or optical fibers 2, that is, in all of the optical fibers, the non-helical sections I1 or the gently helical sections I3 are provided at one end part of the fiber bundle. This makes it still easier to connect a multi-fiber connector with one end part of the fiber bundle with a low loss. In a case where in all of the optical fiber, also the non-helical sections I2 or the gently helical sections I4 are provided at the another end part of the fiber bundle, it is still easier to connect a multi-fiber connector with the another end part of the fiber bundle with a low loss.

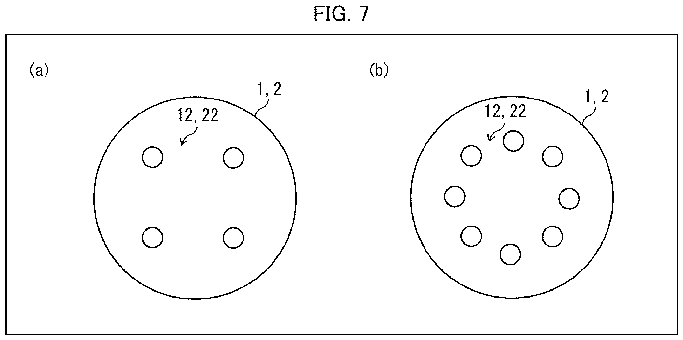

Lastly, the numbers, arrangement, and design of the non-central cores 12 and 22 in cross-sections of the respective optical fibers 1 and 2 can be determined as appropriate. For example, the present application also encompasses, in its technical scope, a configuration in which four cores are provided at the vertices of a square in a cross-section of each optical fiber 1 and 2 (see (a) of Fig. 7) and a configuration in which eight cores are provided at the vertices of a regular octagon in a cross-section of each optical fiber 1 and 2 (see (b) of Fig. 7). Note that Fig. 7 shows a configuration in which the central cores 11 and 21 are absent as an example, but the present application also encompasses, in its technical scope, a configuration in which the central cores 11 and 21 are present.

Reference Signs List

1 Optical fiber
11 Central core
12 Non-central core
13 Clad
I0 Helical section
I1 First non-helical section
I2 Second non-helical section
2 Optical fiber
21 Central core
22 Non-central core
23 Clad
I3 First gently helical section
I4 Second gently helical section
3 Connector-attached optical fiber
4 Optical device
41 Fan-in/fan-out device

**Claims**

1. An optical fiber including at least one core, the optical fiber comprising:

   a helical section in which the at least one core has a helical shape; and
   a first non-helical section in which the at least one core has a linear shape and which includes a first end part of the optical fiber or a first gently helical section in which the number of helices of the at least one core per unit length is smaller than that in the helical section and which includes the first end part of the optical fiber.

2. The optical fiber according to claim 1, comprising a first optical fiber that includes the helical section and a second optical fiber that includes the first non-helical section or the first gently helical section and comprising a connection area between the first optical fiber and the second optical fiber.

3. The optical fiber according to claim 1, comprising an optical fiber that includes: the helical section; and the first non-helical section or the first gently helical section and comprising no connection area between the helical section and the first non-helical section or the first gently helical section.

4. The optical fiber according to any one of claims 1 to 3, further comprising a second non-helical section in which the at least one core has a linear shape and which includes a second end part of the optical fiber or a second gently helical section in which the number of the helices of the at least one core per unit length is smaller than that in the helical section and which includes the second end part of the optical fiber.

5. The optical fiber according to claim 4, comprising a first optical fiber that includes the helical section and a third optical fiber that includes the second non-helical section or the second gently helical section and comprising a connection area between the first optical fiber and the third optical fiber.

6. The optical fiber according to claim 4, comprising an optical fiber that includes: the helical section; and the second non-helical section or the second gently helical section and comprising no connection area between the helical section and the second non-helical section or the second gently helical section.

7. The optical fiber according to any one of claims 1 to 6, wherein the helical section has a length longer than that of the first non-helical section or the first gently helical section.

8. The optical fiber according to any one of claims 1 to 6, wherein the helical section has a length shorter than that of the first non-helical section or the first gently helical section.

9. The optical fiber according to any one of claims 1 to 8, wherein the helical section includes, in an alternating pattern, a section in which the at least one core turns to right and a section in which the at least one core turns to left.

10. The optical fiber according to any one of claims 1 to 9, further comprising a clad surrounding the at least one core, wherein
in the helical section, a center of the at least one core is spaced from a center of the clad.

11. The optical fiber according to any one of claims 1 to 10, wherein

the optical fiber is a multicore fiber including a plurality of cores, and
the at least one core is any of the plurality of cores.

12. The optical fiber according to claim 11, wherein the at least one core in the first non-helical section or the first gently helical section has an effective refractive index higher than that of the at least one core in the helical section.

13. The optical fiber according to any one of claims 1 to 12, wherein the end part of the optical fiber is attached to a structure so as to be incapable of being rotated or be difficult to rotate.

14. An optical device comprising:

the optical fiber according to any one of claims 11 to 13; and
one or a pair of fan-in/fan-out devices connected with one end or both ends of the optical fiber.

15. A method for manufacturing an optical device, the method comprising a cutting step of cutting an optical fiber including at least one core and including a helical section in which the at least one core has a helical shape and a gently helical section in which the number of helices of the at least one core per unit length is smaller than that in the helical section, the cutting being carried out in the gently helical section.

FIG. 1

FIG. 2

FIG. 3

## FIG. 4

## FIG. 5

## FIG. 6

FIG. 7

## INTERNATIONAL SEARCH REPORT

| International application No. |
| --- |
| **PCT/JP2023/004755** |

**A. CLASSIFICATION OF SUBJECT MATTER**

*G02B 6/02*(2006.01)i; *G02B 6/255*(2006.01)i; *G02B 6/38*(2006.01)i
FI:   G02B6/02 411; G02B6/02 461; G02B6/255; G02B6/38

According to International Patent Classification (IPC) or to both national classification and IPC

**B. FIELDS SEARCHED**

Minimum documentation searched (classification system followed by classification symbols)

G02B6/02-6/10; G02B6/44

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2021-47399 A (LUMENTUM OPERATIONS LLC) 25 March 2021 (2021-03-25) paragraphs [0101]-[0115], fig. 1-9 | 1-2, 4-5, 7-8, 10-11, 13-14 |
| Y | | 9 |
| A | | 3, 6, 12, 15 |
| Y | JP 2006-139018 A (SUMITOMO ELECTRIC INDUSTRIES, LTD.) 01 June 2006 (2006-06-01) paragraphs [0029]-[0035], fig. 4A-4B | 9 |
| A | | 1-8, 10-15 |
| Y | JP 2012-123247 A (FUJIKURA LTD.) 28 June 2012 (2012-06-28) paragraphs [0029]-[0065], fig. 1-5 | 9 |
| A | | 1-8, 10-15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 March 2023** | **04 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/004755**

**C.      DOCUMENTS CONSIDERED TO BE RELEVANT**

| Category* | Citation of document, with indication, where appropriate, of the relevant passages | Relevant to claim No. |
|---|---|---|
| X | CN 102147500 A (HARBIN ENGINEERING UNIVERSITY) 10 August 2011 (2011-08-10) paragraphs [0007]-[0035], fig. 1-7 | 1, 3-4, 6-8, 10-11, 13-14 |
| Y | | 9 |
| A | | 2, 5, 12, 15 |
| X | JP 4-170507 A (AGENCY OF INDUSTRIAL SCIENCE & TECHNOLOGY) 18 June 1992 (1992-06-18) p. 2, lower right column, line 5 to p. 4, upper left column, line 19, fig. 1-5 | 1, 3-4, 6-8, 11, 13-14 |
| Y | | 9 |
| A | | 2, 5, 10, 12, 15 |
| A | JP 2008-506992 A (THE REGENTS OF THE UNIVERSITY OF MICHIGAN) 06 March 2008 (2008-03-06) entire text, all drawings | 1-15 |
| A | US 9109969 B2 (KREGER, Stephen T.) 18 August 2015 (2015-08-18) entire text, all drawings | 14 |
| A | JP 2012-211964 A (FUJIKURA LTD.) 01 November 2012 (2012-11-01) entire text, all drawings | 1-15 |

Form PCT/ISA/210 (second sheet) (January 2015)

INTERNATIONAL SEARCH REPORT
Information on patent family members

International application No.

**PCT/JP2023/004755**

| Patent document cited in search report | | | Publication date (day/month/year) | Patent family member(s) | | | Publication date (day/month/year) |
|---|---|---|---|---|---|---|---|
| JP | 2021-47399 | A | 25 March 2021 | US paragraphs [0113]-[0127], fig. 1-9 CN | 2020/0110276 112505933 | A1 A | |
| JP | 2006-139018 | A | 01 June 2006 | US paragraphs [0053]-[0059], fig. 4A-4B | 2006/0159410 | A1 | |
| JP | 2012-123247 | A | 28 June 2012 | US paragraphs [0033]-[0069], fig. 1-5 WO | 2013/0308913 2012/077699 | A1 A1 | |
| CN | 102147500 | A | 10 August 2011 | (Family: none) | | | |
| JP | 4-170507 | A | 18 June 1992 | (Family: none) | | | |
| JP | 2008-506992 | A | 06 March 2008 | US entire text, all drawings WO EP CN | 2006/0024008 2006/014601 1774379 101052907 | A1 A2 A2 A | |
| US | 9109969 | B2 | 18 August 2015 | WO EP | 2012/173979 2721434 | A2 A2 | |
| JP | 2012-211964 | A | 01 November 2012 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8773650 B